# EUROPÄISCHE PATENTSCHRIFT

(11) **EP 2 483 131 B1**
(45) Veröffentlichungstag und Bekanntmachung des Hinweises auf die Patenterteilung: **26.08.2015**
(21) Anmeldenummer: 10762868.7
(22) Anmeldetag: 24.09.2010
(51) Int. Cl.: B62D 5/04

(54) **REGELVERFAHREN FÜR ELEKTRISCHE SERVOLENKUNGEN**
CONTROL METHOD FOR ELECTRIC POWER STEERINGS
PROCÉDÉ DE CONTRÔLE POUR DIRECTIONS ASSISTÉES

(30) Priorität: 02.10.2009 DE 102009048091
(43) Veröffentlichungstag der Anmeldung: 08.08.2012
(73) Patentinhaber: ThyssenKrupp Presta AG, 9492 Eschen (LI); Bayerische Motoren Werke Aktiengesellschaft, 80809 München (DE)
(72) Erfinder: STERNECKER, Bernd, 85540 Haar (DE); DANNOEHL, Caroline, 85591 Vaterstetten (DE); LOHNINGER, Roland, 80393 München (DE); SZEPESSY, Imre, H-1094 Budapest (HU); VARGA, Adam, H-1112 Budapest (HU)
(74) Vertreter: Lenzing Gerber Stute
(86) Internationale Anmeldenummer: PCT/EP2010/005847
(87) Internationale Veröffentlichungsnummer: WO 2011/038865

(56) Entgegenhaltungen:
- DE-A1- 10 035 356
- DE-A1- 10 110 741

## Beschreibung

Die vorliegende Erfindung betrifft ein Regelverfahren für ein Lenksystem mit elektrischer Hilfskraftunterstützung mit den Merkmalen des Oberbegriffs des Anspruchs 1.

Kraftfahrzeuglenkungen mit elektrischer Servounterstützung weisen im allgemeinen eine Lenksäule auf, die über ein Lenkgetriebe mit den gelenkten Rädern des Kraftfahrzeugs verbunden ist. Die Lenksäule enthält einen Drehmomentsensor für das Drehmoment, dass der Fahrer in die Lenkung einleitet. Weiter ist ein elektrischer Servomotor vorgesehen, der über ein Reduziergetriebe das Lenkgetriebe antreibt und den Fahrer bei dem Lenkvorgang unterstützt. Eine Regelung ist erforderlich, damit der Servomotor genau die Unterstützungskraft erzeugt, die zum Erreichen einer bestimmten Lenkcharakteristik erforderlich ist. Beispielsweise soll bei niedrigen Geschwindigkeiten und hohen Drehmomenten eine hohe Unterstützungskraft erzeugt werden, um den Fahrer beim Parken zu entlasten und bei höheren Geschwindigkeiten und geringen Drehmomenten soll eine geringe Unterstützungskraft erzeugt werden, damit der Fahrer ein direktes Lenkgefühl erhält. Ein sehr wichtiger Aspekt besteht darin, dass Fehlfunktionen des Sensors, der Steuerung oder des Elektromotors nicht dazu führen, dass der Elektromotor unerwünschte und unerwartete Lenkvorgänge durchführt.

Die allgemeine Aufgabe für Regelungen besteht deshalb darin, eine störsichere Funktion der elektrischen Servolenkung zu schaffen. Die deutsche Patentschrift DE 100 636 05 B4 sieht vor, dass ein Elektromotor über einen Treiber angesteuert wird. Zusätzlich ist eine Treiberbeschränkungsvorrichtung zur Beschränkung des Antriebs des Elektromotors vorgesehen. Die Treiberbeschränkungsvorrichtung schaltet bei einem erkannten Fehler den Motortreiber vollständig ab. Dies entspricht im Fahrbetrieb einem vollständigen und plötzlichen Wegfall der Servounterstützung. Dies kann für einen Fahrer irritierend wirken.

Die deutsche Offenlegungsschrift DE 198 21 220 A1 sieht vor, den Motorstrom mit einem oberen Grenzwert zu begrenzen. Auf diese Weise soll ein Überschwingen der Unterstützungskraft verhindert werden. Diese Grenze wird auf Basis der gegenelektromotorischen Kraft bestimmt. Damit ist es jedoch nicht möglich, Schwingungen im Regler selbst abzufangen. Schwingungen können auf verschiedene Ursachen zurückzuführen sein. Der Fahrer kann beispielsweise das Lenkrad unnötig hin und her bewegen. Die Straßenoberfläche kann Schwankungen aufweisen, die entsprechende Störgrößen in das Regelsystem einleiten. Die gelenkten Räder des Kraftfahrzeugs können eine Unwucht aufweisen, die ebenfalls periodische Störungen erzeugen. Solche Schwingungen sind durch eine Begrenzung des Motorstroms nicht aufzufangen. Die Druckschrift sieht auch keine untere Grenze für den Motorstrom vor, so dass das Unterstützungsmoment zu null werden kann. Dies entspricht dem oben beschriebenen Fall eines vollständigen und plötzlichen Ausfalls der Servounterstützung.

Eine ähnliche Lösung ist in dem US Patent US 6,404,156 B1 beschrieben. Hier wird die Beschränkung der Unterstützungskraft durch obere und untere Grenzwerte für den Motorstrom bewirkt. In der Kette der elektronischen Steuerung, die die verschiedenen Sensoren (Drehmomentsensoren, Geschwindigkeitssensor), einen Verstärker mit Phasenkompensationen, einen Motortreiber und den Servomotor selbst umfasst, werden in der Stufe des Verstärkers und der Phasenkompensation die Sensorwerte ohne vorgegebene Beschränkung verarbeitet und an den Treiber weitergeleitet. Der Treiber beschränkt den Wertebereich des Steuersignals zum Antrieb des elektrischen Motors, um zu hohe und zu niedrige Motorströme und damit zu hohe und zu niedrige Unterstützungsmomente zu vermeiden.

Die Lenkungen nach dem beschriebenen Stand der Technik weisen folgende Einschränkungen der Fahrdynamik auf:
Die Lenkungen nach der DE 100 636 05 B4 und der DE 198 21 220 A1 beschränken den Wertebereich für den möglichen Motorstrom in bestimmten Fahrsituationen. Dadurch wird auch die maximal mögliche Motorleistung und damit die maximale Servounterstützung begrenzt. In Extremsituationen wie z. B. Ausweichmanövern oder auch extremen unvorhergesehenen Einwirkungen auf die gelenkten Räder kann dies dazu führen, dass am Lenkrad ein höheres Handmoment auftritt als es eigentlich auf Grund der Fahrsituation und der technisch verfügbaren Leistung des Servomotors nötig wäre. Die Lenkungen nutzen deshalb in manchen Situationen nicht den vollen Dynamikbereich des Servoaggregats aus.

Entsprechend einem weiteren Ausführungsbeispiel der Lenkung nach der US 6,404,156 B1 wird das Sensorsignal, das vom Drehmomentsensor der Lenkung an die Steuerung der Lenkung abgegeben wird in Abhängigkeit von bestimmten Parametern beschränkt. Hierdurch gehen Informationen über Extremwerte des Drehmomentsensors verloren, die beispielsweise auftreten können, wenn der Fahrer mit einem sehr hohen Handmoment das Lenkrad betätigt (Ausweichmanöver) oder wenn externe Einflüsse auf die Lenkung einwirken (Schlaglöcher, Bordsteinkontakt, plötzlicher Reifendefekt). Die Steuerung kann auf Grund des zuvor begrenzten Sensorsignals solche Situationen nicht erkennen und deshalb auf diese Situationen nicht angemessen reagieren. Eine angemessene Reaktion wäre in den genannten Fällen die Erhöhung des Unterstützungsmoments bis zum technisch möglichen Maximalwert, um das Handmoment an dem Lenkrad in vorgegebenen Grenzen zu halten. Dies ist bei einer Begrenzung des Sensorsignals vor der Steuerung nicht möglich. Auch diese Lenkung nutzt deshalb nicht den vollen technisch verfügbaren Dynamikbereich des Servoantriebs aus.

Aus der gattungsgemäßen DE 11 2005 000 670 T5 ist eine elektrische Servolenkung mit einer Regelung bekannt, bei der eine Begrenzungseinheit den Anstieg des Sollhilfsdrehmoments auf einen Zielhilfsdrehmomentgrenzwert begrenzt. Besondere Vorkehrungen zur Stabilisierung der Regelung sind in diesem Dokument nicht offenbart.

DE 100 35 356 A1 offenbart ein Regelverfahren für ein Lenksystem mit elektrischer Hilfskraftunterstützung, umfassend: ein Lenkrad, das von einem Fahrer ansteuerbar ist, einen elektrischen Hilfskraftmotor, eine elektrische Steuereinheit, die einen Speicher zum Speichern von digitalen Daten beinhaltet, einen Motorcontroller, der auf Basis eines Sollmotordrehmomentes, das an den Motorcontroller übermittelt wurde, elektrische Signale zur Ansteuerung des Hilfskraftmotors bestimmt und an diesen ausgibt, mindestens einer Sensoreinrichtung zur Bestimmung einer in das Lenkrad eingebrachten Steuergröße, beispielsweise eines Handdrehmomentes, wobei in der Steuereinheit unter Zuhilfenahme der Steuergröße ein Vorgabewert für ein Motordrehmoment des Hilfskraftmotors bestimmt wird,- dadurch gekennzeichnet, dass ein Begrenzungsglied vorgesehen ist, in dem ein oberer Grenzwert für das Sollmotordrehmoment abgelegt ist und für einen Fall A, in dem der Vorgabewert den oberen Grenzwert überschreitet, das Begrenzungsglied den oberen Grenzwert als Sollmotordrehmoment an den Motorcontroller ausgibt und für einen Fall B, in dem der Vorgabewert den oberen Grenzwert nicht überschreitet, das Begrenzungsglied den Vorgabewert als Sollmotordrehmoment an den Motorcontroller ausgibt.

Es ist deshalb Aufgabe der vorliegenden Erfindung, ein Regelverfahren für eine elektrische Servolenkung bereitzustellen, das auch in kritischen Lenksituationen die Fahrstabilität erhält und die Fehlertoleranz erhöht. Insbesondere soll eine Regelung für eine elektrische Servolenkung geschaffen werden, die den zur Verfügung stehenden Dynamikbereich des Servo-antriebs vollständig ausnutzen kann und deren Regelung besonders stabil ist.

Diese Aufgabe wird von einem Regelverfahren mit den Merkmalen des Anspruchs 1 gelöst. In den Ansprüchen 2 bis 6 sind vorteilhafte Weiterbildungen der Erfindung dargestellt.

Bei einem Regelverfahren für ein Lenksystem mit elektrischer Hilfskraftunterstützung, umfassend:
- ein Lenkrad, das von einem Fahrer ansteuerbar ist,
- einen elektrischen Hilfskraftmotor,
- eine elektrische Steuereinheit, die einen Speicher zum Speichern von digitalen Daten beinhaltet,
- eine Motortreibereinheit (Motorcontroller), die auf Basis eines Sollmotordrehmomentes, das an die Motortreibereinheit übermittelt wurde, elektrische Signale zur Ansteuerung des Hilfskraftmotors bestimmt und an diesen ausgibt,
- mindestens einer Sensoreinrichtung zur Bestimmung einer in das Lenkrad eingebrachten Steuergröße, beispielsweise eines Handdrehmomentes,
- wobei in der Steuereinheit unter Zuhilfenahme der Steuergröße ein Vorgabewert für ein Motordrehmoment des Hilfskraftmotors bestimmt wird,
- weiter umfassend ein Begrenzungsglied, in dem ein oberer Grenzwert für das Sollmotordrehmoment abgelegt sind, und
- für einen Fall A, in dem der Vorgabewert den oberen Grenzwert überschreitet, das Begrenzungsglied den oberen Grenzwert als Sollmotordrehmoment an die Motortreibereinheit ausgibt, und
- für einen Fall B, in dem der Vorgabewert den oberen Grenzwert nicht überschreitet, das Begrenzungsglied den Vorgabewert als Sollmotordrehmoment an die Motortreibereinheit ausgibt, sind zusätzlich
- ein Dämpfungsglied und ein Stabilisierungsglied vorgesehen, die Dämpfungs- und Stabilisierungssignale erzeugen, wobei die Summe aus den Ausgangssignalen des Begrenzungsglieds, des Dämpfungsglieds und des Stabilisierungsglieds als Sollmotordrehmoment an den Motorcontroller ausgegeben wird.

Auf diese Weise wird erreicht, dass sowohl das Sensorsignal in seinem vollen Wertebereich ausgewertet werden kann und dass die Motortreibereinheit den Motor mit ihrem vollen verfügbaren Ausgangsstrom beaufschlagen kann und so in Extremsituationen die maximal verfügbare Dynamik des Lenksystems ausgenutzt werden kann, und es wird erreicht, dass die Regelung besonders wirksam stabilisiert wird.

Das Begrenzungsglied ist im Signalpfad zwischen der Steuerung, die den Vorgabewert für das Sollmotordrehmoment bestimmt, und dem Motorcontroller angeordnet. Das Begrenzungsglied kann aber physikalisch in einer Baueinheit mit der Steuerung zusammengefasst sein. Dabei ist es unerheblich, ob die Begrenzung rein softwaretechnisch oder rein hardwaretechnisch oder als Kombination aus softwaretechnischer und hardwaretechnischer Realisation dargestellt ist.

Wenn weiter vorgesehen ist, dass
- in dem Speicher ein unterer Grenzwert für das Sollmotordrehmoment abgelegt ist, dessen Wert kleiner als der obere Grenzwert ist und
- für einen Fall C, in dem der Vorgabewert dem unteren Grenzwert unterschreitet, das Begrenzungsglied den unteren Grenzwert als Sollmotordrehmoment an die Motortreibereinheit ausgibt, und
- für einen Fall D, in dem der Vorgabewert den unteren Grenzwert nicht unterschreitet und den oberen Grenzwert nicht überschreitet, das Begrenzungsglied den Vorgabewert als Sollmotordrehmoment an die Motortreibereinheit ausgibt,
kann auch verhindert werden, dass das Sollmotordrehmoment aufgrund einer Fehlinformation beispielsweise der Sensoren die Servounterstützung plötzlich und für den Fahrer überraschend wegfällt.

Die Grenzwerte für das maximale und das minimale Sollmotordrehmoment können variabel gestaltet werden und somit den Parametern der Fahrsituation angepasst werden, wenn der obere und/oder der untere Grenzwert von der eingebrachten Steuergröße abhängig ist.

Die Regelung kommt bei höheren Geschwindigkeiten einer Steuerung nahe, die keine oder nur geringe Regeleingriffe vornimmt, wenn bei hohen Fahrzeuggeschwindigkeiten der Abstand zwischen dem oberen Grenzwert und dem unteren Grenzwert kleiner ist als bei niedrigen Fahrzeuggeschwindigkeiten.

Es kann eine Sicherheitsfunktion vorgesehen sein, die eine redundante Berechnung der Ausgangssignale des Begrenzungsglieds, des Dämpfungsglieds und des Stabilisierungsglieds vornimmt. Eine solche Sicherheitsfunktion erfordert nur geringe Prozessorleistung, was insbesondere dann gilt, wenn die Sicherheitsfunktion nicht den Rechenvorgang des Controllers vollständig redundant berechnet. Sie kann bei einer Inkonsistenz der berechneten Signale eine Abschaltung der Lenkungsverstärkung bewirken.

Nachfolgend wird ein Ausführungsbeispiel der vorliegenden Erfindung anhand der Zeichnung näher beschrieben. Es zeigen:
- Fig. 1:: ein elektrisch unterstütztes Lenksystem in einer perspektivischen Darstellung;
- Fig. 2:: Wertebereich für das Motordrehmoment in Abhängigkeit von dem Drehmomentsensorsignal für die erfindungsgemäße Lenkung;
- Fig. 3:: ein Blockschaltbild der elektrischen Servolenkung;
- Fig. 4:: eine schematische Darstellung des gesamten Lenksystems mit Lenkrad, Drehmomentsensor, Steuergerät, Motortreiber, Motor und Lenkgetriebe mit den gelenkten Rädern;
- Fig. 5:: den Programmablauf der Steuerung der elektrischen Servolenkung in einem Flussdiagramm;
- Fig. 6:: den zulässigen Wertebereich des Drehmomentanforderungssignals T_{RA} in Abhängigkeit von dem Drehmomentsensorsignal T_{TS}.;
- Fig. 7:: eine genauere Darstellung der Dämpfung aus Fig. 3 und 5; sowie
- Fig. 8:: eine genauere Darstellung der Stabilisierung aus Fig. 3 und 5.

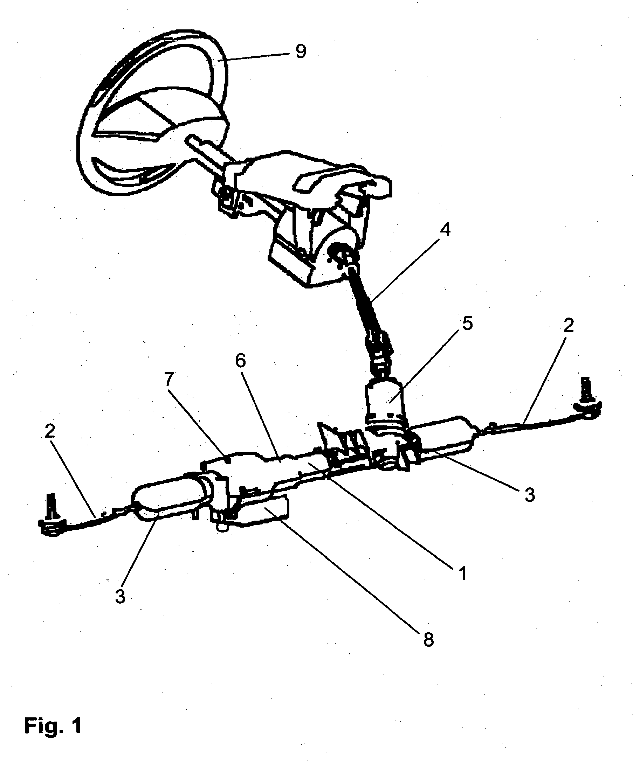

In der Fig. 1 ist eine Kraftfahrzeugservolenkung mit einem Lenkgetriebe 1 dargestellt, in dem eine Zahnstange in Längsrichtung des Lenkgetriebes 1 verschieblich angeordnet ist. Die Zahnstange trägt zwei Spurstangen 2, die über Kugelgelenke mit der Zahnstange verbunden sind. Die Kugelgelenke sind in Faltenbälgen 3 gegenüber Umwelteinflüssen gekapselt angeordnet. Die Spurstangen 2 sind ihrerseits mit Achsschenkeln der gelenkten Räder verbunden. Eine Verlagerung der Zahnstange in dem Lenkgetriebe 1 führt somit in bekannter Weise zu einer Verschwenkung der gelenkten Räder und damit zu einem Lenkvorgang des Kraftfahrzeugs.

Über eine Lenkwelle 4 wird ein Drehmoment in die Lenkung eingeleitet. Ein Drehmomentsensor 5 erfasst das in die Lenkwelle 4 eingeleitete Drehmoment. Zur Servounterstützung des Lenkvorgangs und somit zur Verringerung des vom Fahrer aufzuwendenden Handmomentes ist in dem Lenkgetriebe 1 ein Servoantrieb integriert. Der Servoantrieb umfasst ein Motorgehäuse 6, ein Getriebegehäuse 7 und eine Steuerung 8. Der Motor und das Getriebe sind in dieser Darstellung nicht erkennbar.

Im Betrieb wird in an sich bekannter Weise der Fahrer ein Lenkrad 9 betätigen, welches dann über die Lenkwelle 4 und ein Ritzel eine Verlagerung der Zahnstange in dem Lenkgetriebe 1 bewirkt. Das in dem Drehmomentsensor 5 erfasste Drehmoment wird überwacht und zur Vereinfachung des Lenkvorgangs wird der Servomotor durch die Steuerung 8 mit Strom beaufschlagt, um die Lenkbewegung des Fahrers zu unterstützen.

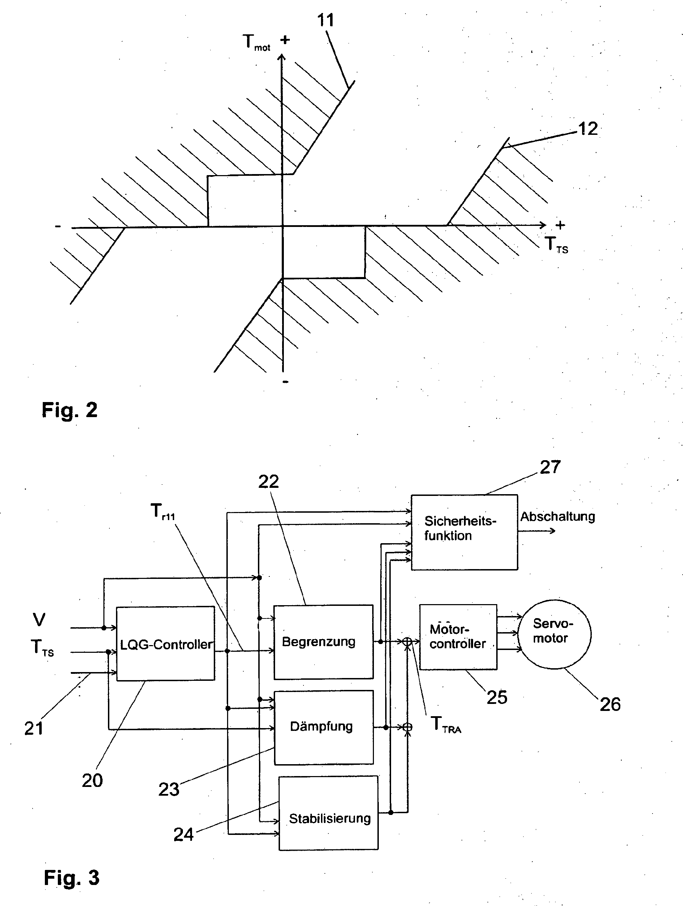

Die Möglichkeiten, die Servolenkung zu steuern und zu regeln, sind vielfältig. So kann die Steuerung 8 in einfachster Weise eine Servounterstützung durch den Servomotor bewirken, in dem das angeforderte Motorunterstützungsmoment einfach proportional zu dem ermittelten Sensormoment ist. In der Praxis werden Servolenkungen jedoch in vielen Fällen über Kennfelder gesteuert, die in Form einer Werttabelle oder durch Ablage analytischer Funktionen in einen Speicher gespeichert sind. Ein Wertebereich für das Ergebnis einer derartigen Regelung ist in der Fig. 2 dargestellt.

Die Fig. 2 zeigt in einem Koordinatensystem auf der Horizontalen mögliche Werte für ein Drehmomentsignal T_{TS}, welches der Drehmomentsensor 5 in Abhängigkeit von dem in das Lenkrad 9 eingeleiteten Drehmoment abgibt. In der vertikalen Achse ist ein mögliches Motordrehmoment T_{MOT} dargestellt, welches von dem Motortreiber auf Grund des Drehmomentsignals T_{TS} angefordert wird. Eine obere Kennlinie 11 und eine untere Kennlinie 12 begrenzen das Signal T_{MOT} nach oben und nach unten. Die schraffierten Bereiche oberhalb der Kennlinie 11 und unterhalb der Kennlinie 12 sind verbotene Bereiche, die das Motordrehmoment T_{MOT} nicht erreichen darf. Aus der Kennlinie 11 bestimmt sich entsprechend den jeweilige maximale Wert max, der für die an die Motorsteuerung übergebene Wert für das Drehmomentenanforderungssignal T_{RA} übergeben werden darf. Aus der Kennlinie 12 bestimmt sich entsprechend der jeweilige minimalen Wert min, der für die an die Motorsteuerung übergebene Wert für das Drehmomentenanforderungssignal T_{RA} übergeben werden darf. Der Bereich zwischen den Kennlinien 11 und 12 ist der erlaubte Wertebereich, in dem das Motorsignal T_{MOT} sich befinden darf. Bei einem gegebenen Drehmomentsignal T_{TS} kann das Motorsignal T_{MOT} verschiedene Werte annehmen. Diese Werte können von der Fahrzeuggeschwindigkeit V abhängig sein.

Die Fig. 3 zeigt ein Blockschaltbild einer erfindungsgemäßen Servolenkung. In dem Blockschaltbild sind als Eingangssignale die Fahrzeuggeschwindigkeit V und das Signal T_{TS} des Drehmomentsensors 5 vorgesehen, die einem Controller 20 zugeführt werden. Weitere Eingangssignale können bei 21 zugeführt werden. Der Controller 20 berechnet aus den Eingangswerten ein Signal für das angeforderte Motordrehmoment T_{RM}. Das Drehmomentsignal T_{TS} steht dem Controller in vollem Umfang zur Verfügung und kann deshalb vollständig ausgewertet werden. Der Controller 20 erzeugt ebenso ein Signal T_{RM}, das den vollständigen möglichen Wertebereich umfasst, also einen maximal möglichen Dynamikumfang aufweist.

Ein Begrenzungsglied 22 erhält als Eingangssignal die Fahrzeuggeschwindigkeit V_{O} und das angeforderte Motordrehmoment T_{RM}. Das Begrenzungsglied 22 berechnet hieraus anhand einer Tabelle oder anhand von analytischen Funktionen einen Maximalwert und einen Minimalwert, den das Motordrehmoment bei den vorgegebenen Parameterwerten annehmen darf. Bezogen auf die Fig. 2 sorgt das Begrenzungsglied 22 dafür, dass der geforderte Drehmomentwert nicht in die schraffierten, verbotenen Bereiche des Diagramms aus Fig. 2 gelangt.

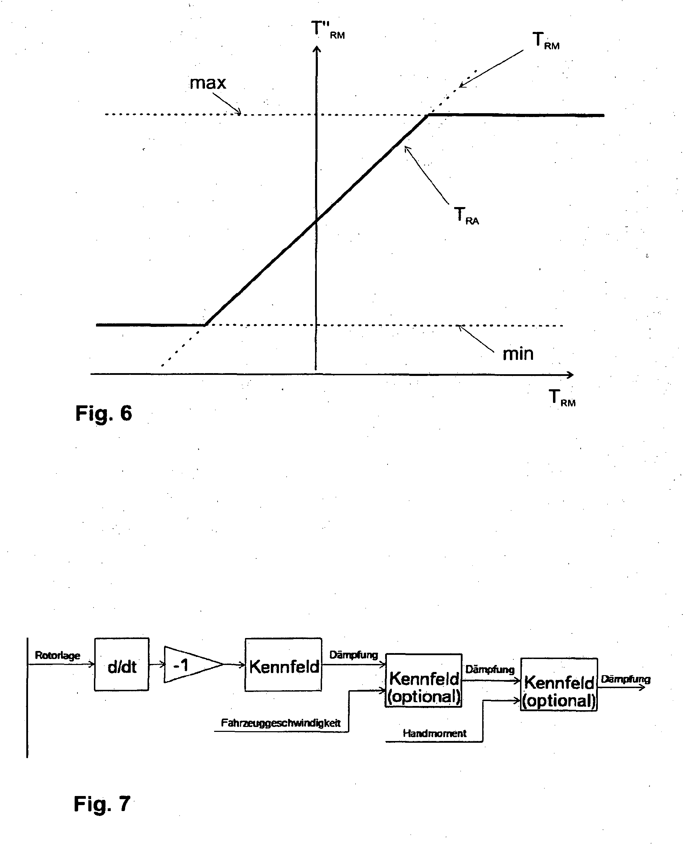

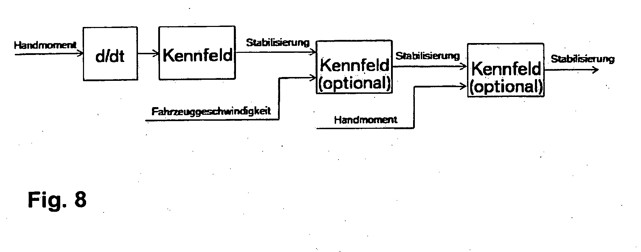

Das von dem Begrenzungsglied 22 derart begrenzte Signal wird mit weiter unten im Zusammenhang mit Fig. 7 und 8 näher beschriebenen Signalen eines Dämpfungsglieds 23 und eines Stabilisierungsgliedes 24 addiert. Die Funktionen des Dämpfungsglieds 23 und des Stabilisierungsglieds 24 (letzteres wird auch "D-Anteil" genannt) sind aus elektronisch geregelten elektrischen Servolenksystemen bekannt. Die Addition ergibt dann ein Vorgabesignal T_{RA} für das tatsächlich angeforderte Unterstützungsmoment. Erst die Summe aus den Signalen der Glieder 22, 23 und 24 weist die gewünschte Stabilität auf. Das Signal T_{RA} wird an einen Motorcontroller 25 übergeben, der schließlich einen Servomotor 26 mit Strom beaufschlagt.

Die erzeugten Signale werden auch an eine Sicherheitsfunktion 27 übergeben, die ein Abschalten der Servolenkung bewirken kann, wenn eine redundante Berechnung der Glieder 22, 23 und 24 einen Fehler in dem Steuergerät feststellt. Dabei ist vorgesehen, dass die Sicherheitsfunktion 27 nicht den komplexen Rechenvorgang des Controllers 20 redundant berechnet, sondern nur die Berechnung der Glieder 22, 23 und 24 nachrechnet:

Zum Erreichen des angestrebten großen Dynamikumfangs der Servolenkung ist es hier wichtig, dass das Signal T_{TS} und das Ausgangssignal des Motorcontrollers 25 den vollen verfügbaren Dynamikbereich abdecken können, so dass die vollständige von dem Drehmomentsensor aufgenommene Bandbreite des Signals T_{TS} ausgewertet werden kann. Außerdem kann der Motorcontroller, dessen Ausgangswertebereich nicht limitiert ist, die maximal mögliche Unterstützungsleistung des Servomotors 26 abrufen. Die geschwindigkeitsabhängige oder von sonstigen Parametern abhängige Begrenzung des angeforderten Unterstützungsmoments T_{RA} findet in dem Begrenzungsglied 22 statt.

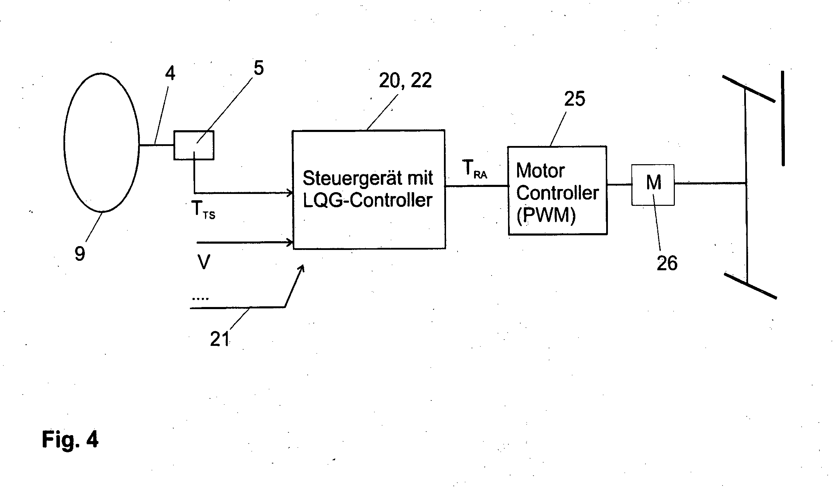

Die Fig. 4 zeigt die Regelstrecke der erfindungsgemäßen Servolenkung in einer schematischen Darstellung.

Das Handrad 9 ist über die Spindel 4 mit dem Drehmomentsensor 5 verbunden. Das Drehmomentsignal T_{TS} geht in die hier als integrierte Baugruppe dargestellte Einheit, die den Controller 20 und das Begrenzungsglied 22 umfasst. Weiter wird die Fahrzeuggeschwindigkeit V der Einheit 20, 22 zugeführt. Weitere Signale 21 werden, wie oben beschrieben, von der Steuerung berücksichtigt.

Die Einheit 20, 22 gibt in Abhängigkeit von den Eingangsgrößen das Drehmomentanforderungssignal T_{RA} an den Motorcontroller oder Motortreiber 25, der wiederum den Servomotor 26 mit Strom beaufschlagt. Der Servomotor 26 treibt über ein Getriebe die Zahnstange und damit die gelenkten Räder des Kraftfahrzeugs an. Die Fahrbahn wirkt über die gelenkten Räder zurück auf die Lenkspindel 4. In dem Drehmomentsensor 5 entstehen deshalb nicht nur Drehmomentsignale auf Grund einer Betätigung des Lenkrades 9, sondern auch auf Grund einer Rückwirkung von der Fahrbahn über die Räder zu der Lenkspindel 4. Insbesondere können Drehmomente an dem Drehmomentsensor 5 auch auftreten, wenn das Lenkrad 9 nicht betätigt oder gar vom Fahrer losgelassen wird.

In einer besonders vorteilhaften Weiterbildung erfolgt die Regelung mit einem LQG-Regelalgorithmus, wie er im Vortrag "Optimale Regelung einer elektromechanischen Servolenkung" auf der 5. VDI mechatronik Tagung 2003 in Fulda (7.-8. Mai 2003) von Herrmann Henrichfreise, Jürgen Jusseit und Harwin Niessen beschrieben wurde.

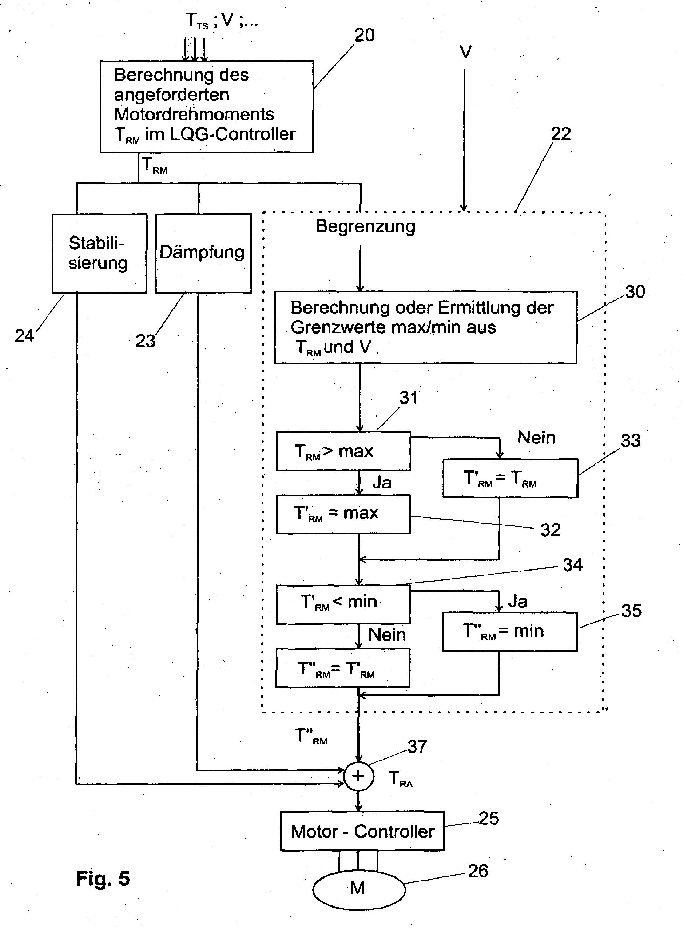

In der Fig. 5 ist der Verfahrensablauf in der erfindungsgemäßen Servolenkung veranschaulicht, der zur Berechnung der Handsteuerung des Servomotors 26 durchgeführt wird.

Die Eingangssignale T_{TS} und V werden in einem Controller ausgewertet und es wird in an sich bekannter Weise hieraus ein angefordertes Motordrehmoment berechnet, das als Signal T_{RM} ausgegeben wird. Das Steuergerät 20 ist aus dem Stand der Technik bekannt. Es kann beispielsweise nach dem Prinzip des Steuergeräts arbeiten, das in der Europäischen Patentschrift EP 1 373 051 B1 beschrieben wird. Dieses Steuergerät arbeitet als sogenannter Beobachter, der aus Eingangsgrößen verschiedene Ausgangsgrößen und intern verwendete Daten berechnet. In dem bekannten Steuergerät, das dem Steuergerät 20 entsprechen kann, ist ein mathematisches Modell der Lenkung gespeichert, welches die verschiedenen Abhängigkeiten der Messwerte und der nicht gemessenen Zustandswerte voneinander enthält. Es kann aber auch vorgesehen sein, dass Steuergerät 20 als ein relativ einfaches Steuergerät in Form eines PID-Reglers oder ähnlich auszuführen.

Das Motordrehmomentsignal T_{RM} wird dann an die bereits benannten Komponenten nämlich den Dämpfungsteil 23 und den Stabilisierungsteil 24 übergeben. Parallel erhält auch das Begrenzungsglied 22 dieses Signal. Das weitere Eingangssignal, die Fahrzeuggeschwindigkeit V, geht ebenfalls an das Begrenzungsglied 22, das hier als gestrichelte Linie dargestellt ist.

In dem Begrenzungsglied 22 werden nun in einem Rechenschritt 30 aus einer Tabelle oder anhand von analytischen Funktionen die zulässigen Grenzen (Obergrenze max und Untergrenze min) des Motordrehmomentanforderungssignals T_{RM} berechnet. Das tatsächlich von dem Steuergerät 20 abgegebene Signal T_{RM} wird dann in einem ersten Schritt 31 mit der Obergrenze max verglichen. Ist T_{RM} größer als max, so wird T'_{RM} = max gesetzt. Ist T_{RM} kleiner als der Grenzwert max, so bleibt T'_{RM} = T_{RM} unverändert. Dies ist in den Rechenschritten 32 und 33 veranschaulicht. Das so nach oben begrenzte Signal wird an den Schritt 34 weiter gegeben, in dem das Signal T_{RM} mit der Untergrenze verglichen wird. Ist T_{RM} kleiner als die Untergrenze min, so wird T'_{RM} durch min ersetzt. Dies erfolgt im Schritt 35.

Wird im Schritt 34 festgestellt, dass T'_{RM} nicht kleiner als min ist, so wird T'_{RM} = T'_{RM} unverändert ausgegeben.

Als Ausgabesignal des Begrenzungsglieds 22 wird also ein Signal erzeugt, das entweder das unveränderte Signal T"_{RM} = T_{RM} darstellt, wenn nämlich in den Schritten 31 und 34 festgestellt wird, dass T_{RM} kleiner als max und größer als min ist. Werden in den Schritten 31 oder 34 die Grenzen nach oben oder nach unten überschritten, so wird der jeweilige Grenzwert als Ausgang des Begrenzungsglieds 22 ausgegeben.

Dieses Ausgangssignal wird auf einen Addierer 37 gegeben, der weiter die Ausgangswerte des Dämpfungsglieds 23 und des Stabilisierungsglieds 24 erhält. Letztere können positives oder negatives Vorzeichen aufweisen und werden in dem Addierer 37 zu einem Drehmomentanforderungs-Signal T_{RA} addiert. Das Signal T_{RA} wird dann an den Motorcontroller 25 abgegeben, der den Servomotor 26 entsprechend bestromt.

Es ist hervorzuheben, dass das Ausgangssignal T"_{RM} = T_{RM} des Steuergeräts 20 durch das Begrenzungsglied 22 unverändert bleibt, sofern die im Schritt 30 berechneten Grenzwerte max und min nicht überschritten werden. Es steht damit für den Signalpfad T_{TS} bis T_{RA} die volle mögliche Dynamik zur Verfügung.

Die Begrenzung, die in den Schritten 33 und 35 erfolgt, wertet den vollen Informationsumfang des Drehmomentsensors T_{TS} und der anderen Eingangsdaten des Steuergeräts 20 aus. Auch im Falle der Begrenzung kann das an den Motorcontroller 25 abgegebene Drehmomentanforderungssignal T_{RA} durch die hinzugefügten Dämpfungs-Stabilisierungskomponenten größer oder kleiner als die Obergrenzen max und min aus dem Begrenzungsglied 22 werden, so dass der Motorkontroller 25 und folglich der Servomotor 26 eine höhere Dynamik entwickeln können, als das allein aus dem Begrenzungsglied 22 heraus vorgesehen wäre.

Figur 7 zeigt ein Blockschaltbild des Dämpfungsglieds 23. Es ist dargestellt, dass die Dämpfung im wesentlichen die zeitliche Ableitung der Rotorposition des Servomotors 26 auswertet und daraus das Dämpfungssignal generiert. Als weitere Parameter gehen die Fahrzeuggeschwindigkeit und das Handmoment ein.

Figur 8 zeigt ein Blockschaltbild des Stabilisierungsglieds 24. Hier ist dargestellt, dass die Stabilisierung im wesentlichen die zeitliche Ableitung des Handmoments auswertet und daraus das Stabilisierungssignal generiert. Als weitere Parameter gehen auch hier die Fahrzeuggeschwindigkeit und das Handmoment ein.

### Bezugszeichenliste

- 1.: Lenkgetriebe
- 2.: Spurstange
- 3.: Faltenbalg
- 4.: Lenkwelle
- 5.: Drehmomentsensor
- 6.: Motorgehäuse
- 7.: Getriebegehäuse
- 8.: Steuerung
- 9.: Lenkrad
- 11.: Obere Kennlinie
- 12.: Untere Kennlinie
- 20.: Controller
- 21.: Signal
- 22.: Begrenzungsglied
- 23.: Dämpfungsglied
- 24.: Stabilisierungsglied
- 25.: Motorcontroller
- 26.: Servomotor
- 27.: Sicherheitsfunktion
- 30.: Rechenschritt
- 31.: Rechenschritt
- 32.: Rechenschritt
- 33.: Rechenschritt
- 34.: Rechenschritt
- 35.: Rechenschritt

## Patentansprüche

1. Regelverfahren für ein Lenksystem mit elektrischer Hilfskraftunterstützung, umfassend:
- ein Lenkrad (9), das von einem Fahrer ansteuerbar ist,
- einen elektrischen Hilfskraftmotor (26),
- eine elektrische Steuereinheit (20), die einen Speicher zum Speichern von digitalen Daten beinhaltet,
- einen Motorcontroller (25), der auf Basis eines Sollmotordrehmomentes (T_{RA}), das an den Motorcontroller (25) übermittelt wurde, elektrische Signale zur Ansteuerung des Hilfskraftmotors (26) bestimmt und an diesen ausgibt,
- mindestens einer Sensoreinrichtung (5) zur Bestimmung einer in das Lenkrad (9) eingebrachten Steuergröße (T_{TS}), beispielsweise eines Handdrehmomentes,
- wobei in der Steuereinheit (20) unter Zuhilfenahme der Steuergröße (T_{TS}) ein Vorgabewert (T_{RM}) für ein Motordrehmoment des Hilfskraftmotors (26) bestimmt wird,
- ein Begrenzungsglied (22), in dem ein oberer Grenzwert (max) für das Sollmotordrehmoment (T_{RA}) abgelegt ist und
- für einen Fall A, in dem der Vorgabewert (T_{RM}) den oberen Grenzwert (max) überschreitet, das Begrenzungsglied (22) den oberen Grenzwert (max) als Sollmotordrehmoment (T_{RA}) an den Motorcontroller (25) ausgibt und
- für einen Fall B, in dem der Vorgabewert (T_{RM}) den oberen Grenzwert (max) nicht überschreitet, das Begrenzungsglied (22) den Vorgabewert als Sollmotordrehmoment an den Motorcontroller (25) ausgibt,
- **dadurch gekennzeichnet, dass** ein Dämpfungsglied (23) und ein Stabilisierungsglied (24) vorgesehen sind, die Dämpfungs- und Stabilisierungssignale erzeugen, wobei die Summe aus den Ausgangssignalen des Begrenzungsglieds (22), des Dämpfungsglieds (23) und des Stabilisierungsglieds (24)als Sollmotordrehmoment (T_{RA}) an den Motorcontroller (25) ausgegeben wird.

2. Regelverfahren nach Anspruch 1, **dadurch gekennzeichnet, dass**
- in dem Begrenzungsglied (22) ein unterer Grenzwert (min) für das Sollmotordrehmoment (T_{RA}) abgelegt ist, dessen Wert kleiner als der obere Grenzwert (max) ist und
- für einen Fall C, in dem der Vorgabewert (T_{RM}) dem unteren Grenzwert unterschreitet (min), das Begrenzungsglied (22) den unteren Grenzwert (min) als Sollmotordrehmoment (T_{RA}) an den Motorcontroller (25) ausgibt, und
- für einen Fall D, in dem der Vorgabewert (T_{RM}) den unteren Grenzwert (min) nicht unterschreitet und den oberen Grenzwert (max) nicht überschreitet, das Begrenzungsglied (22) den Vorgabewert (T_{RM}) als Sollmotordrehmoment (T_{RA}) an den Motorcontroller (25) ausgibt.

3. Regelverfahren nach einem der vorhergehenden Ansprüche **dadurch gekennzeichnet, dass** der obere Grenzwert (max) und/oder der untere Grenzwert (min) von der eingebrachten Steuergröße (T_{TS}) abhängig ist.

4. Regelverfahren nach einem der vorhergehenden Ansprüche, **dadurch gekennzeichnet, dass** der obere Grenzwert (max) und/oder der untere Grenzwert (min) von der Fahrzeuggeschwindigkeit (v) abhängig ist.

5. Regelverfahren nach einem der vorhergehenden Ansprüche **dadurch gekennzeichnet, dass** eine Sicherheitsfunktion (27) eine redundante Berechnung der Ausgangssignale des Begrenzungsglieds (22), des Dämpfungsglieds (23) und des Stabilisierungsglieds (24) vornimmt.

6. Regelverfahren nach Anspruch 5, **dadurch gekennzeichnet, dass** die Sicherheitsfunktion (27) nicht den Rechenvorgang des Controllers (20) vollständig redundant berechnet.

## Claims

1. Control method for a steering system with electrical power assistance, comprising:
- a steering wheel (9) which is controlled by a driver,
- an electric servo motor (26),
- an electric control unit (20) which contains a memory for storing digital data,
- a motor controller (25) which on the basis of a target motor torque (T_{RA}) sent to the motor controller (25) determines electrical signals to control the servo motor (26) and transmits these to the servo motor,
- at least one sensor device (5) to determine a control value (T_{RS}) applied to the steering wheel (9) such as a manually applied torque,
- which in the control unit (20) with the aid of the control value (T_{RS}) a default value (T_{RM}) is determined for a motor torque of the servo motor (26),
- a limiting component (22) in which an upper limit (max) for the target torque (T_{RA}) is stored and
- for a case A in which the default value (T_{RM}) exceeds the upper limit (max), the limiting component (22) transmits the upper limit (max) as the target torque (T_{RA}) to the motor controller (25) and
- for a case B in which the default value (T_{RM}) does not exceed the upper limit (max) the limiting component (22) transmits the target value as the target torque to the motor controller (25),
- **characterised in that** a damping component (23) and a stabilisation component (24) are provided which generate damping and stabilisation signals, whereby the total of the output signals of the limiting component (22), the damping component (23) and the stabilisation component (24) is output as the target motor torque (T_{RA}) to the motor controller (25).

2. A control method according to Claim 1, **characterised in that**
- a lower limit value (min) for the target motor torque (T_{RA}) is stored in the limiting component (22) whose value is smaller than the upper limit value (max) and
- for a case C in which the default value (T_{RM}) is lower than the lower limit value (min), the limiting component (22) outputs the lower limiting value (min) as the target motor torque (T_{RA}) to the motor controller (25), and
- for a case D in which the default value (T_{RM}) is not lower than the lower limiting value (min) and does not exceed the upper limiting value (max) the limiting component (22) outputs the target value (T_{RM}) as the target motor torque (T_{RA}) to the motor controller (25).

3. A control method according to any one of the preceding claims, **characterised in that** the upper limiting value (max) and/or the lower limiting value (min) is dependent upon the vehicle speed (v).

4. A control method according to any one of the preceding claims, **characterised in that** the upper limiting value (max) and/or the lower limiting value (min) is dependent upon the introduced control value (T_{TS}).

5. A control method according to any one of the preceding claims, **characterised in that** a safety function (27) carries out a redundant calculation of the output signals of the limiting component (22), of the damping component (23) and of the stabilisation component (24).

6. A control method according to Claim 5, **characterised in that** the safety function (27) does not calculate the calculation process of the controller (20) in fully redundant mode.

## Revendications

1. Procédé de réglage pour un système de direction pourvu d'une assistance électrique, comprenant :
- un volant (9) qui peut être actionné par un conducteur,
- un moteur d'assistance électrique (26),
- une unité de commande électrique (20) qui contient une mémoire pour stocker des données numériques,
- une unité de commande de moteur (25) qui détermine sur la base d'un couple de consigne du moteur (T_{RA}) qui a été transmis à l'unité de commande de moteur (25) des signaux électriques pour commander le moteur d'assistance (26) et les fournit à celui-ci,
- au moins un dispositif de détection (5) pour déterminer une grandeur de commande (T_{TS}) introduite dans le volant (9), par exemple un couple manuel,
- auquel cas une valeur prédéfinie (T_{RM}) pour un couple du moteur d'assistance du moteur d'assistance (26) est déterminée dans l'unité de commande (20) à l'aide de la grandeur de commande (T_{TS}),
- un organe de limitation (22) dans lequel est stockée la valeur limite supérieure (max) pour le couple de consigne du moteur (T_{RA}) et
- pour un cas A, dans lequel la valeur prédéfinie (T_{RM}) dépasse la valeur limite supérieure (max), l'organe de limitation (22) fournit la valeur limite supérieure (max) comme couple de consigne du moteur (T_{RA}) à l'unité de commande de moteur (25) et
- pour un cas B, dans lequel la valeur prédéfinie (T_{RM}) ne dépasse pas la valeur limite supérieure (max), l'organe de limitation (22) fournit la valeur prédéfinie comme couple de consigne du moteur à l'unité de commande de moteur (25),
- caractérisé en ce l'on prévoit un organe atténuateur (23) et un organe de stabilisation (24), lesquels génèrent des signaux d'atténuation et de stabilisation, auquel cas la somme se composant des signaux de sortie de l'organe de limitation (22), de l'organe atténuateur (23) et de l'organe de stabilisation (24) est fournie comme couple de consigne du moteur (T_{RA}) à l'unité de commande de moteur (25).

2. Procédé de réglage selon la revendication 1, **caractérisé en ce que**
- une valeur limite inférieure (min) pour le couple de consigne du moteur (T_{RA}) est stockée dans l'organe de limitation (22), dont sa valeur est inférieure à la valeur limite supérieure (max), et
- pour un cas C, dans lequel la valeur prédéfinie (T_{RM}) est inférieure à la valeur limite inférieure (min), l'organe de limitation (22) fournit la valeur limite inférieure (min) comme couple de consigne du moteur (T_{RA}) à l'unité de commande de moteur (25),
- et pour un cas D, dans lequel la valeur prédéfinie (T_{RM}) n'est pas inférieure à la valeur limite inférieure (min) et ne dépasse pas la valeur limite supérieure (max), l'organe de limitation (22) fournit la valeur prédéfinie (T_{RM}) comme couple de consigne du moteur (T_{RA}) à l'unité de commande de moteur (25).

3. Procédé de réglage selon une des revendications précédentes, **caractérisé en ce que** la valeur limite supérieure (max) et/ou la valeur limite inférieure (min) dépendent d'une grandeur de commande (T_{TS}) introduite.

4. Procédé de réglage selon une des revendications précédentes, **caractérisé en ce que** la valeur limite supérieure (max) et/ou la valeur limite inférieure (min) dépendent de la vitesse du véhicule (v).

5. Procédé de réglage selon une des revendications précédentes, **caractérisé en ce qu'**une fonction de sécurité (27) entreprend un calcul redondant des signaux de sortie de l'organe de limitation (22), de l'organe atténuateur (23) et de l'organe de stabilisation (24).

6. Procédé de réglage selon la revendication 6, **caractérisé en ce que** le processus de calcul de l'unité de commande (20) n'est pas calculé de manière entièrement redondante par la fonction de sécurité (27).
